# EUROPEAN PATENT SPECIFICATION

(11) **EP 1 939 052 B1**
(45) Date of publication and mention of the grant of the patent: **11.05.2011**
(21) Application number: 07380352.0
(22) Date of filing: 13.12.2007
(51) Int. Cl.: B60R 21/34

(54) **Passive safety device for vehicles**
Passive Sicherheitsvorrichtung für Fahrzeuge
Dispositif de sécurité passif pour véhicules

(30) Priority: 26.12.2006 ES 200602770 U
(43) Date of publication of application: 02.07.2008
(73) Proprietor: Seat, S.A., 08760 Martorell, Barcelona (ES)
(72) Inventor: Lobo Rabadán, José Luis, 08760 Martorell - Barcelona (ES); Caballero Arias, Francés, 08760 Martorell - Barcelona (ES); Segura Santillana, Angel, 08760 Martorell - Barcelona (ES)
(74) Representative: Carvajal y Urquijo, Isabel

(56) References cited:
- EP-A1- 1 488 987
- EP-A1- 1 683 691
- EP-A1- 1 712 434
- FR-A1- 2 852 570
- FR-A1- 2 874 876

## Description

### OBJECT OF THE INVENTION

The present invention relates to a device intended to act as a passive safety element in vehicles, specifically against impacts on the hood of such vehicles.

The object of the invention is that upon an impact of a pedestrian on the vehicle hood, a deformation in the safety device absorbing a large part of the stress due to said impact occurs, minimizing the effects of such impact with respect to the pedestrian.

The invention is thus located in the automobile industry field, and more specifically in the safety element field.

### BACKGROUND OF THE INVENTION

Within the passive safety field, one of the greatest points of research is the protection of pedestrians in the event of an accident.

As is known, there are currently elements which are deformed in the event of an impact to absorb energy aid thus decrease the injuries of the pedestrian.

On the current market, deformable elements can be found in the hood of vehicles, which are useful for protecting the pedestrian from the hard points in said hood. If the pedestrian impacts against one of these points, the injuries are much greater than those he or she would suffer if the impact is against a deformable element or point The solutions known to that effect range from collapsible hinges to hoods that are raised upon detecting an impact and thus allow greater energy absorption, because the deformation capacity of the part is greater.

The existence of deformable elements located at the support points of the hood on the vehicle front end are also known, these points being the most critical points of the hoo with regard to pedestrian safety because they have a small deformation capacity as they form hard points, i.e. they absorb very little energy in the event of an impact, whereby the pedestrian suffers considerable injuries, in an areas of the hood on which the impacts are more common. Such deformable elements, like those shown in FR2874876, allow the energy absorption in the support points of the hood, such that they collapse starting from a certain load. Nevertheless, these devices have a quite complex configuration and also a very difficult maintenance.

It would therefore be desirable to obtain a simpler deformable device allowing energy absorption at these rigid points corresponding to the supports of the hood on the vehicle front end, such that said devices collapse starting from a certain load. This load can furthermore be due to reasons other than running over a pedestrian, such as for example the inappropriate use of the hood, to a blow, etc, therefore it would also be desirable to have a device that could be easily replaced and substituted.

### DESCRIPTION OF THE INVENTION

The safety device proposed by the invention fully and satisfactorily solves the aforementioned problems, such that on one hand it can absorb part of the energy of the impact due to the deformation of the hood, improving the degree of safety for the pedestrians and reducing injuries in the event of an impact, and on the other hand it can be easily replaced or substituted when necessary.

To that end and more specifically, said device is formed as a fusible stop breaking before a load exceeding a pre-established value upon an impact on the hood, the stop being formed as a bushing which can be removably coupled to the vehicle front end, wherein the bushing is provided at its upper opening with a plurality of tabs constriting said opening and on which the corresponding hood stop is supported.

According to the invention, said tabs are provided with respective inner ribs increasing the rigidity thereof.

According to a preferred embodiment of the invention, said bushing is fixed to the front end of the car by means of a thread, which allows easily assembling and disassembling it, in order to substitute it when necessary.

The device can be manufactured in different materials but a polymeric material, such as ABS, for example, is especially suitable due to performance and cost.

### DESCRIPTION OF THE DRAWINGS

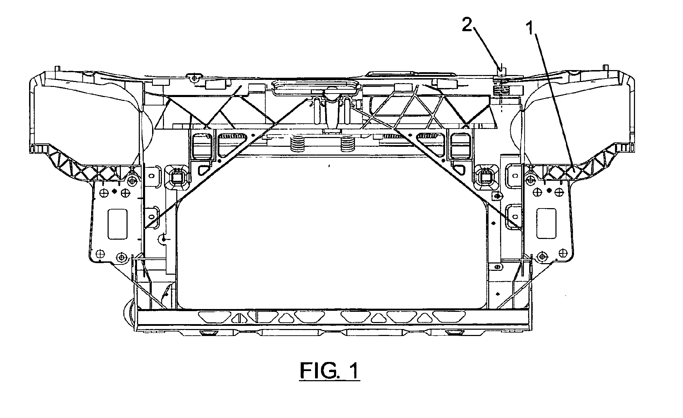

To complement the following description and with the aim of aiding a better understanding of the features of the invention according to a preferred practical embodiment thereof, a set of drawings is attached as an integral part of said description, in which the following has been shown with an illustrative and non-limiting character
Figure 1 shows an elevational view of a vehicle front end provided at one of its sides with the passive safety device forming the object of the present invention.

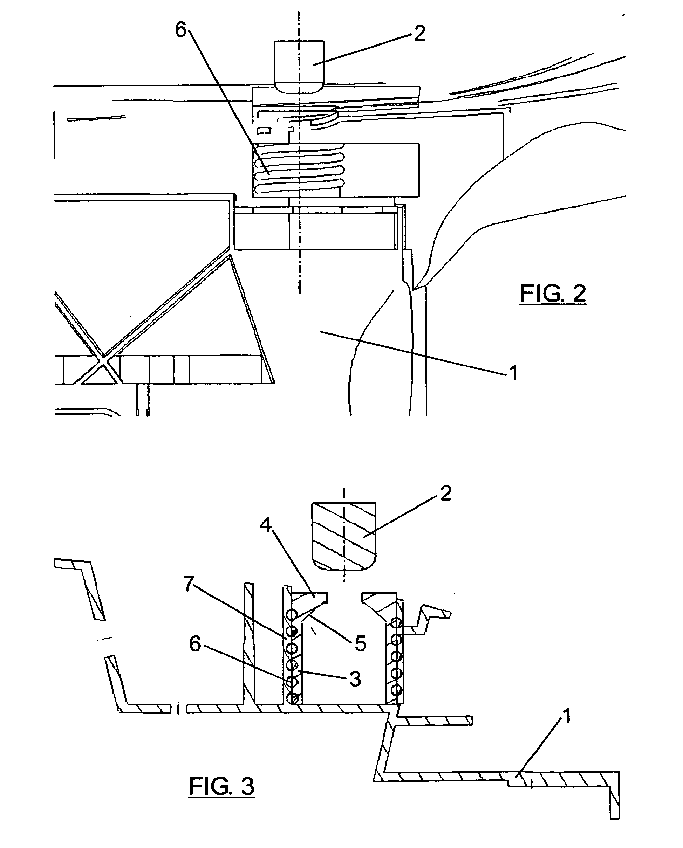

Figure 2 shows an enlarged detail of the previous figure, at the level of said safety device.
Figure 3 shows a section of the same assembly shown in Figure 2 at the diametric level of the device.

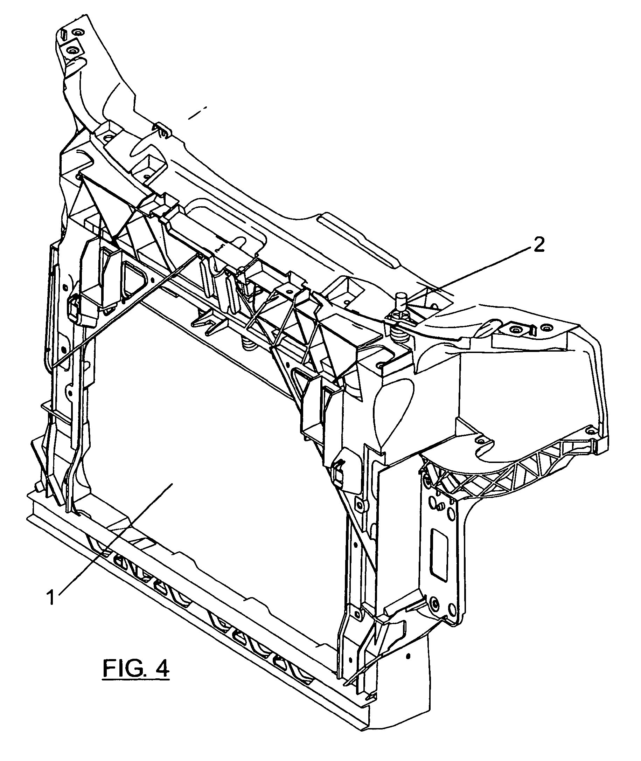

Figure 4 shows a perspective of the assembly shown in Figure 1.
Figure 5 shows a perspective of the assembly shown in Figure 2.
Figure 6 shows an upper plan view of the passive safety device isolated from the rest of the vehicle.
Figure 7 finally shows a diametric sectional profile of the device, next to which the hood stop is shown.

### PREFERRED EMBODIMENT OF THE INVENTION

The indicated figures show a vehicle front end (1) merely by way of example, it being evident that said front end can be substituted with any other front end, without this affecting the essence of the invention. Given that the hood configuration can be very variable, its depiction has been omitted, its graphic presence being limited to one of the stops (2) through which said hood is supported on the front end (1).

The passive safety device proposed by the invention is formed as a cylindrical bushing (3) intended to adopt a vertical arrangement on the vehicle front end (1), having at the level of its upper opening a plurality of tabs (4) substantially constricting said opening, forming the impact or support base for the hood stop (2).

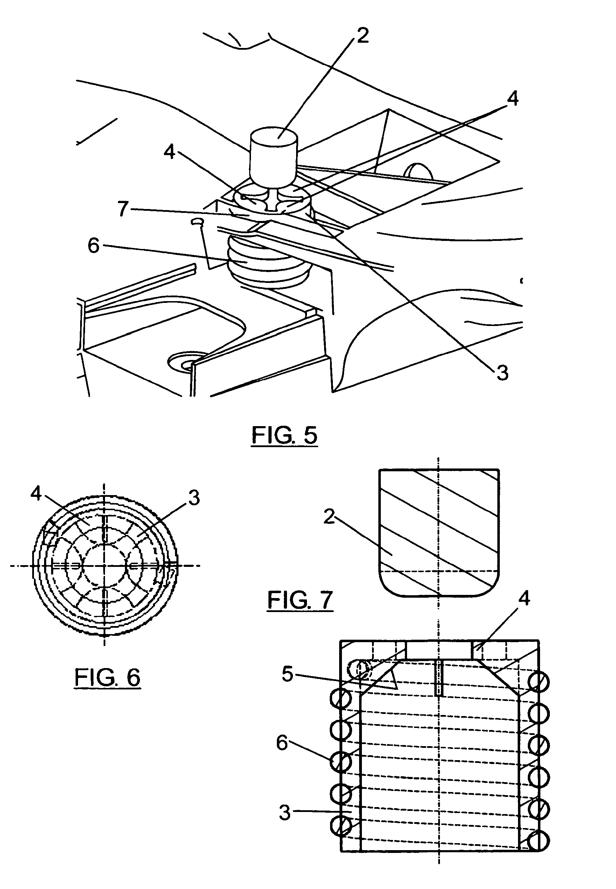

These tabs (4) are stiffened at the lower part with the cooperation of side plates or ribs (5) with a triangular configuration, which can especially be seen in Figure 7, which side plates provide greater rigidity to the tabs (4), so that the latter do not give way upon an impact lower than that expected for their "melting", i.e. their breaking to occur.

Finally, and as a supplement of the described structure, the outer surface of the bushing (3) is formed as a thread (6) through which the device is removably fixed in an also threaded hole (7) of the structure of the vehicle front end (1).

It is thus achieved that when a pedestrian impacts on the vehicle hood, the stops (2) of said hood, since they are supported on "soft" points, cause the tabs (4) to break, which breaking entails the absorption of a large part of the mechanical energy of the impact, which subsequently does not affect the pedestrian who has been run over.

The assembly by means of a thread of the device on the vehicle front end of complementarily entails that the device can be easily assembled and disassembled, both for its initial assembly and for a subsequent need to substitute it

## Claims

1. A passive safety device for vehicles which, being especially designed to be located on a vehicle front end (1) at support points corresponding to hood stops (2), comprises a cylindrical bushing (3), with a vertical axis, provided with fixing means for fixing to said front end and further provided at its upper opening with a plurality of tabs (4) constricting said upper opening and forming a frangible support for the hood stops, wherein, when the stress which said tabs are subjected to, due to the effect of an impact of a pedestrian on the hood, exceeds a pre-established limit, the stops of said hood cause said tabs to break, said passive safety device being **characterized in that** said tabs (4) are provided at the lower part with respective triangular ribs or side plates (5) extending between said tabs and the inner wall of the bushing.

2. A passive safety device for vehicles according to claim 1, **characterized in that** the outer surface (6) of said bushing is threaded for its removable coupling in a correspondingly threaded cylindrical hole or housing (7) of the front end.

3. A passive safety device for vehicles according to one of the previous claims, **characterized in that** it is manufactured from a polymeric material, such as ABS.

## Patentansprüche

1. Passive Sicherheitsvorrichtung für Fahrzeuge, die, da sie besonders zur Anordnung an einem Fahrzeugvorderende (1) an Stützpunkten, die Motorhaubenanschlägen entsprechen, ausgelegt ist, eine zylindrische Buchse (3) mit einer Vertikalachse umfasst, die mit Befestigungsmitteln zum Befestigen an dem Vorderende versehen ist und ferner an ihrer oberen Öffnung mit mehreren Zungen (4) versehen ist, welche die obere Öffnung beschränkten und eine zerbrechliche Stütze für die Motorhaubenanschläge ausbilden, wobei, wenn die Beanspruchung, der die Zungen aufgrund der Auswirkung eines Aufpralls eines Fußgängers auf die Motorhaube unterzogen sind, eine vorgegebene Grenze überschreitet, die Anschläge der Motorhaube bewirken, dass die Zungen brechen, wobei die passive Sicherheitsvorrichtung **dadurch gekennzeichnet ist, dass** die, Zungen (4) am unteren Teil mit jeweiligen dreieckigen Rippen oder Seitenplatten (5) versehen sind, die zwischen den Zungen und der Innenwand der Buchse verlaufen.

2. Passive Sicherheitsvorrichtung für Fahrzeuge nach Anspruch 1, **dadurch gekennzeichnet, dass** die Außenfläche (6) der Buchse zu ihrer lösbaren Kupplung in einem entsprechend gewindeten zylindrischen Loch oder Gehäuse (7) des Vorderendes mit einem Gewinde-versehen ist.

3. Passive Sicherheitsvorrichtung für Fahrzeuge nach einem der vorhergehenden Ansprüche, **dadurch gekennzeichnet, dass** sie aus einem Polymermaterial, wie etwa ABS, gefertigt ist.

## Revendications

1. Un dispositif de sécurité passive pour véhicules qui, étant spécialement conçu pour être situé sur la partie frontale d'un véhicule (1) à des points de support correspondant aux butées de capot (2), comprend une douille cylindrique (3) ayant un axe vertical, dotée de moyens de fixation à cette partie frontale, ainsi que pourvue à son ouverture supérieure de plusieurs languettes (4) resserrant cette ouverture supérieure et formant un support frangible pour les butées de capot, où, lorsque la contrainte à laquelle ces languettes sont soumises, causée par l'effet de l'impact d'un piéton sur le capot, dépasse une limite préétablie, les butées de ce capot provoquent la rupture de ces languettes, ce dispositif de sécurité passive étant **caractérisé en ce que** ces languettes (4) sont pourvues sur leur partie inférieure de nervures triangulaires respectives ou de flasques (5) qui s'étendent entre ces languettes et la paroi interne de la douille.

2. Un dispositif de sécurité passive pour véhicules selon la revendication 1, **caractérisé en ce que** la surface externe (6) de cette douille est filetée pour permettre son accouplement amovible dans un trou ou un logement cylindrique (7) de la partie frontale, fileté de manière correspondante.

3. Un dispositif de sécurité passive pour véhicules selon l'une quelconque des revendications précédentes, **caractérisé en ce qu'**il est fabriqué dans un matériau polymère, tel que l'ABS.
